# EUROPÄISCHE PATENTSCHRIFT

(11) **EP 1 242 522 B1**
(45) Veröffentlichungstag und Bekanntmachung des Hinweises auf die Patenterteilung: **12.04.2006**
(21) Anmeldenummer: 00990642.1
(22) Anmeldetag: 04.12.2000
(51) Int. Cl.: C08K 3/00, C04B 35/634, C04B 35/638

(54) **SPRITZGUSSVERSÄTZE AUS NANOSKALIGEN PULVERN**
INJECTION MOULDING CROSS JOINTS MADE OF NANOSCALIC POWDERS
DEPORTS DE COULEE POUR MOULAGE PAR INJECTION FABRIQUES A PARTIR DE POUDRES DE GRANULOMETRIE NANOMETRIQUE

(30) Priorität: 03.12.1999 DE 19958335
(43) Veröffentlichungstag der Anmeldung: 25.09.2002
(73) Patentinhaber: Leibniz-Institut für Neue Materialien gemeinnützige GmbH, 66123 Saarbrücken (DE)
(72) Erfinder: KRAUS, Juliane, 88131 Lindau (DE); NONNINGER, Ralph, 66129 Saarbrücken-Bübingen (DE); SCHMIDT, Helmut, 66130 Saarbrücken-Güdingen (DE)
(74) Vertreter: Barz, Peter
(86) Internationale Anmeldenummer: PCT/EP2000/012180
(87) Internationale Veröffentlichungsnummer: WO 2001/040364

(56) Entgegenhaltungen:
- EP-A- 0 501 602
- EP-A- 0 700 881
- DE-A- 4 212 593
- US-A- 4 197 118
- US-A- 5 155 158

## Beschreibung

Die vorliegende Erfindung betrifft Spritzgußmassen mit nanoskaligen keramischen Pulvern, Verfahren zur Herstellung von gesinterten Formkörpern aus diesen Spritzgußmassen, diese gesinterten Formkörper und deren Verwendung.

Das Pulverspritzgießen hat sich in den vergangenen Jahren als keramisches Formgebungsverfahren für Keramik und Metall etabliert. Stahl, Hartmetall, Wolfram- und Cobaltlegierungen, interrnetallische Phasen, Nickelbasislegierung und zahlreiche keramische Rohstoffe, wie z.B. Aluminiumoxid, Siliciumnitrid und SiC, können mit diesem Verfahren verarbeitet werden. Die Vorteile des Verfahrens liegen in der erreichbaren homogenen Pulverpackung, den geringen Dichtegradienten in Formteilen und vor allem in der Möglichkeit, komplexe Bauteile in großen Stückzahlen, kostengünstig und endkontumah zu fertigen. Durch die Möglichkeit, Hinterschneidungen und Durchbrüche in ein Formteil einbringen zu können, und durch die realisierbaren guten Oberflächen kann die Nachbearbeitung auf ein geringes Maß reduziert werden.

Insbesondere für keramische Mikrostrukuren ist ein feinkömiges Gefüge zwingend erforderlich, das meist nur über nanoskalige keramische Pulver erhalten werden kann. Daher wäre ein Spritzgußverfahren mit nanoskaligen keramischen Pulvern zur Bildung von gesinterten Formkörpern sehr interessant.

Während das Pressen und das Formgießen nanoskaliger Pulver gebräuchliche Verfahren darstellen, sind die Extrusion und das Spritzgießen von nanoskaügen Teilchen weniger bekannt. Es besteht die Schwierigkeit, daß ein hoher Pulvergehalt immer zwingend erforderlich ist, der in den noch plastisch verformbaren und verarbeitbaren Massen realisiert werden muß. Schwierig ist dabei die Beherrschung der Rheologie, da übliche Spritzgußbinder mit nanoskaligen Pulvern schon bei niedrigen Pulvergehalten sehr hochviskos werden.

Beim Spritzguß von Keramikpulvem werden nach dem Stand der Technik für Pulver mit Teilchengrößen im µm-Bereich und sub-µm-Bereich Oberflächenmodifikatoren in Form von Carbonsäuren, wie z. B. Stearinsäure, und Binder bzw. Bindemittel, wie Wachse, z. B. Paraffine mit einem Molekulargewicht von 300-600 D, und Polymere mit einem Molekulargewicht von 10.000 D verwendet. Die Stearinsäure als Oberflächenmodifikator reicht bei Teilchengrößen im sub-µm-Bereich jedoch nicht aus, um ausreichend niedrige Viskositäten zu erreichen.

Über die Verarbeitung von Pulvern mit Teilchengrößen unter 100 nm ist wenig bekannt. Song, Evans, J. Rheologie 40, 1996, 131 ff. und Song, Evans, Ceramics International 21 (1995), 325 ff., beschreiben die Verarbeitung eines feinen Pulvers über das Spritzgießen, bei der ein ZrO₂-Pulver mit einem mittleren Teilchendurchmesser von 70 nm und einer spezifischen Oberfläche von 220 m²/g verarbeitet wird. Zur Entfernung des Binders, dem sogenannten Entbindern, aus dem nach dem Spritzgießen erhaltenen Grünkörper auf Basis von ZrO₂ mit einer Teilchengröße von 70 nm ist bei einer Formteildicke von 6 mm eine Wärmebehandlung von 195 Stunden, also mehr als 8 Tagen, erforderlich. Hieraus ist ersichtlich, daß das Entbindern aus spritzgegossenen Formteilen aus nanoskaligen Pulvern mit eminent hohen Verarbeitungszeiträumen und hohen Energiekosten verbunden ist.

Die Bedeutung der oberflächenaktiven Substanzen (Oberflächenmodifikatoren) auf die Kompatibilität des Versatzes wird in dem Maße größer, in dem die Teilchengröße der eingesetzten Pulver kleiner wird. Nach dem Stand der Technik werden beim Pulverspritzgießen gewöhnlich niedermolekulare bifunktionelle organische Moleküle als oberflächenaktive Substanzen verwendet. Lenk, DKG 72, 1995, 10, 636 ff. beschreibt den Gebrauch von Carbonsäuren mit Kettenlängen von 12 bis 22 Kohlenstoffatomen als oberflächenaktive Substanzen. Nach Gützer, Silikattechnik 40, 1989, 2, 62 ff. wird Ölsäure am häufigsten als Oberflächenmodifikator eingesetzt, wobei eine optimale Ölsäurebelegung mit 2,5 mg/m² Oberfläche angegeben wird. Durch den Zusatz von Ölsäure wird die Viskosität der Spritzgußversätze reduziert, so daß auf diese Weise eine Erhöhung des Pulvergehaltes möglich ist.

Nach dem Stand der Technik sind mit den angesprochenen Oberflächenmodifikatoren nur Teilchengrößen mit einer Untergrenze von etwa 70 nm noch verarbeitbar. Unterhalb einer Primärteilchengröße von 70 nm steigt die spezifische Oberfläche drastisch an und kann bei Teilchen von 10 nm bis zu 200 m²/g betragen. Die dadurch erhöhten Wechselwirkungen mit den organischen Prozeßhilfsmitteln und die damit verbundene hohe Viskosität reduziert den maximal möglichen Pulvergehalt. Daher ist ein Spritzgießen von derart kleinen Teilchen nach den bisherigen Verfahren nicht möglich.

Eine weitere kritische Größe stellt das Entbindem der spritzgegossenen Formteile dar. Nachdem über Spritzgießen ein keramischer Grünkörper auf Basis nanoskaliger Teilchen hergestellt ist, folgt der kritische Schritt des Entbindems der Formteile. Hierbei muß der gesamte Binder aus dem Formteil entfernt werden, ohne daß es zu einer Deformation des Formteils oder einer Schädigung der Mikrostruktur kommt. Je kleiner die Pulverteilchen werden, aus denen der Grünkörper aufgebaut ist, um so kleiner wird die Porengröße im Grünkörper und desto schwieriger ist es, die organischen Prozeßhüfsmittel aus dem Grünkörper zu entfernen, ohne daß sich im Innern des Grünkörpers ein Druck aufbaut, der zu einer Schädigung des Gefüges führt.

US-A-5155158 betrifft durch Strangguss oder Spritzguss formpressbare Keramik-Zusammensetzungen, die sinterfähiges Pulver und ein Polyacetal-Bindemittel sowie ein Dispergier-Hilfsmittel, das Hydroxystearinsäure sein kann, enthalten. Das sinterfähige Pulver besitzt typischerweise eine mittlere Teilchengröße im Bereich von 0,1 bis 30 µm. Die Zusammensetzung kann Paraffinwachs enthalten.

DE-A-4212593 beschreibt thermoplastische Formmassen, die ein thermoplastisches Siliconharz oder ein thermoplastisches Gemisch verschiedener Siliconharze und sinterfähiges Pulver enthalten. Zusätzlich zu dem thermoplastischen Siliconharz kann thermoplastisches Bindemittel auf organischer Basis wie Ethylen-Vinylacetat-Copolymer enthalten sein. Für die Formmasse werden auch weitere Additive wie z.B. Stearinsäureamid und Paraffinwachs genannt.

In EP-A-0700881 werden Bindemittel für keramische Massen beschrieben, die aus mindestens einem sinterfähigen Pulver und mindestens einem thermoplastischen Bindemittel bestehen. Das Bindemittel besteht aus Polyamid und mindestens einem Styrol-Copolymer. Als Beispiele für Additive werden Stearinsäureamide und Wachse genannt.

In EP-A-0501602 und US-A-4197118 werden Verfahren zur Herstellung von gesinterten Formkörpern beschrieben, wobei das Bindemittel teilweise durch Extraktion mit Lösungsmittel und gegebenenfalls anschließend durch thermische Behandlung entfernt wird.

Aufgabe der Erfindung war es, einen Spritzgußversatz mit nanoskaligen Pulvern zu entwickeln, mit dem hohe Pulvergehalte bei gleichzeitig niedrigen Viskositäten erreicht werden können, um damit gesinterte Formkörper hoher Qualität herzustellen. Insbesondere soll damit ein Pulverspritzgießen von nanoskaligen Teilchen mit Größen deutlich unter 100 nm möglich werden. Außerdem soll, selbst bei sehr kleinen Teilchen, ein Entbindern ohne Schädigung des Gefüges und, insbesondere im Hinblick auf Zeit- und Energiebedarf, in wirtschaftlicher Weise durchführbar sein.

Diese Aufgabe wird überraschenderweise durch die erfindungsgemäße Spritzgußmasse gelöst, die als thermoplastisches Polymer eine Mischung von Polyvinylether und Ethylen-Vinylacetat-Copolymer,
mindestens ein Wachs,
mindestens ein nanoskaliges Chalkogenid-, Carbid- oder Nitridpulver und
mindestens ein Säureamid enthält.

Auf diese Weise gelingt es, sehr hohe Pulvergehalte im Versatz zu realisieren, so daß bei sehr kleinen nanoskaligen Pulvern eine keramische Formgebung überhaupt erst möglich wird. Dies hat eine enorm hohe Bedeutung für die darauf aufbauende Verfahrenstechnik und Produktentwicklung. Es lassen sich erstmals gesinterte Formkörper, deren Qualität oder Struktur den Einsatz sehr kleiner nanoskaliger Teilchen erforderlich machen, über die Pulverspritzgußtechnologie herstellen. Darüberhinaus ist ein Entbindem ohne Gefügeschädigung auch bei diesen sehr kleinen nanoskaligen Teilchen möglich und kann einfacher durchgeführt werden.

Das eingesetzte Pulver ist ein nanoskaliges keramikbildendes Pulver. Dabei handelt es sich insbesondere um ein nanoskaliges Chalkogenid-, Carbid- oder Nitridpulver. Bei dem Chalkogenidpulver kann es sich um ein Oxid-, Sulfid-, Selenid- oder Telluridpulver handeln. Nanoskalige Oxidpulver sind besonders bevorzugt. Es können alle Pulver eingesetzt werden, die üblicherweise für das Pulversintem verwendet werden. Das Pulver enthält im allgemeinen nanoskalige anorganische Feststoffteilchen aus Halbmetall- oder Metallchalkogeniden, -carbiden oder -nitriden. Beispiele sind (gegebenenfalls hydratisierte) Oxide wie ZnO, CdO, SiO₂, TiO₂, ZrO₂, CeO₂, SnO₂, Al₂O₃, In₂O₃, La₂O₃, Fe₂O₃, Cu₂O, Ta₂O₅, Nb₂O₅, V₂O₅, MoO₃ oder WO₃, aber auch Phosphate, Silikate, Zirkonate, Aluminate und Stannate, Sulfide wie CdS, ZnS, PbS und Ag₂S, Selenide wie GaSe, CdSe und ZnSe, Telluride wie ZnTe oder CdTe, Carbide wie WC, CdC₂ oder SiC, Nitride wie BN, AIN, Si₃N₄ und Ti₃N₄, entsprechende Mischoxide wie Metall-Zinn-Oxide, z.B. Indium-Zinn-Oxid (ITO), Antimon-Zinn-Oxid (ATO), fluor-dotiertes Zinnoxid (FTO) und Zn-dotiertes Al₂O₃, Leuchtpigmente mit Y- oder Eu-haltigen Verbindungen, oder Mischoxide mit Perowskitstruktur wie BaTiO₃ und PbTiO₃. Es kann eine Art von nanoskaligen anorganischen Feststoffteilchen oder eine Mischung verschiedener nanoskaliger anorganischer Feststoffteilchen eingesetzt werden.

Die Pulver enthalten bevorzugt nanoskalige Teilchen, bei denen es sich um ein Oxid, Oxidhydrat, Chalkogenid, Nitrid oder Carbid von Si, Al, B, Zn, Cd, Ti, Zr, Ce, Sn, In, La, Fe, Cu, Ta, Nb, V, Mo oder W, besonders bevorzugt von Si, Al, B, W, Ti und Zr, handelt. Besonders bevorzugt werden Oxide eingesetzt. Bevorzugte nanoskalige anorganische Feststoffteilchen sind Aluminiumoxid, Zirkonoxid, Siliciumcarbid, Wolframcarbid und Siliciumnitrid.

Die im Pulver enthaltenen nanoskaligen anorganischen Feststoffteilchen besitzen im allgemeinen eine durchschnittliche Primärteilchengröße im Bereich von 1 bis 300 nm oder 1 bis 100 nm, vorzugsweise 5 bis 50 nm und besonders bevorzugt 10 bis 20 nm. Die Primärteilchen können auch in agglomerierter Form vorliegen, bevorzugt liegen sie nicht agglomeriert bzw. im wesentlichen nicht agglomeriert vor.

Zum Zwecke der Formgebung wird das Ausgangspulver mit einem organischen Binder vermischt, der für die nötige Plastifizierung der Mischung sorgt. Die erfindungsgemäße Spritzgußmasse enthält als Binderkomponenten mindestens eine Mischung von Polyvinylether und Ethylen-Vinylacetat-Copolymer als thermoplastisches Polymer und mindestens ein Wachs, bevorzugt ein Paraffinwachs.

Das eingesetzte thermoplastische Polymer ist eine Kombination von Ethylen-Vinylacetat (EVA)-Copolymer und Polyvinylether. Es kann gegebenenfalls eine Mischung von mehr als zwei thermoplastischen Polymeren eingesetzt werden.

Als zusätzliches optionales thermoplastisches Polymer kann jedes geeignete thermoplastische Polymer verwendet werden, insbesondere solche, die für den Pulverspritzguß gebräuchlich sind. Beispiele für weitere einsetzbare thermoplastische Polymere sind Polyolefine, wie Polyethylen, Polypropylen und Poly-1-buten, Vinylpolymere, wie Polyvinylchlorid, Polyvinylidenchlorid, Polyvinylacetat, Polymethyl-(meth)acrylat, Polyacrylnitril, Polystyrol, und Polyvinylalkohol, Polyamide, Polyester, Polyacetale, Polycarbonate, lineare Polyurethane und entsprechende Copolymere, wobei Polyolefine bevorzugt sind.

Als eine Polymerkomponente wird ein EVA-Copolymer eingesetzt. Die Bandbreite X der im Handel erhältlichen EVA-Copolymere ist hinsichtlich Vinylacetatgehalt und Schmelzindex sehr groß. Die besten Ergebnisse werden erreicht, wenn ein EVA-Copolymer mit einem hohen Schmelzindex, bevorzugt von 1 bis 1000 g/10 min, bevorzugter von 10 bis 1000 g/10 min und besonders bevorzugt von 100 bis 1000 g/10 min, verwendet wird. Durch Einsatz von EVA-Copolymeren mit einen niedrigen Gehalt an Vinylacetat im Copolymer, bevorzugt unter 40%, besonders bevorzugt unter 30%, werden besonders niedrigviskose Bindersysteme erhalten.

Geeignete EVA-Copolymere sind z.B. Lupolen® V2520J, Lupolen V2910K, Lupolen V3510K, Lupolen V3910 DX und Lupolen V5510SX von BASF und Elvax® 450, Elvax 360, Elvax 240, Elvax 210 und Elvax 410 von DuPont, wobei Elvax 210 und Elvax 410 besonders bevorzugt sind.

Durch die Mischung aus EVA-Copolymer und einem Polyvinylether kann eine Verbesserung der Versatzviskosität erreicht werden. Das Gewichtsverhältnis von EVA-Copolymer zu Polyvinylether liegt bevorzugt im Bereich von 0,25 bis 1,50, bevorzugter von 0,30 bis 1,00 und besonders bevorzugt von 0,35 bis 0,65.

Geeignete Polyvinylether zeichnen sich durch lange Seitenketten aus, wobei die Seitenkette bevorzugt mehr als 10 Kohlenstoffatome, besonders bevorzugt mehr als 16 Kohlenstoffatome aufweist. Ein geeigneter Polyvinylether ist z.B. das von BASF vertriebene Luwax® V, ein Octadecylpolyvinylether.

Die erfindungsgemäße Spritzgußmasse enthält als weitere Binderkomponente mindestens ein Wachs. Dabei können alle gebräuchlichen Wachse, allein oder als Mischung von zwei oder mehreren, eingesetzt werden.

Bei dem Wachs kann es sich um einen natürlichen, chemisch modifizierten oder synthetischen Wachs handeln. Bei den natürlichen Wachsen kann es sich um pflanzliche Wachse, z.B. Candelillawachs und Carnaubawachs, tierische Wachse, z.B. Schellackwachs und Bienenwachs, Mineralwachse, z.B. Ceresin, oder petrochemische Wachse, z.B. Petrolatum, Paraffinwachse und Mikrowachse, handeln. Montanesterwachse und Sasolwachse sind Beispiele für chemische modifizierte Wachse und Polyalkylenwachse und Polyethylenglycolwachse sind Beispiele für synthetische Wachse. Bevorzugt werden Paraffinwachse eingesetzt.

Im Handel erhältliche Wachse stellen im allgemeinen Mischungen aus n-Alkanen dar, wobei sich erfindungsgemäß Alkane mit Kettenlängen von 30 bis 100 Kohlenstoffatomen als sehr günstig und mit Kettenlängen von 20 bis 40 Kohlenstoffatomen als besonders günstig erwiesen haben. Zur Charakterisierung der Wachsmischung dient der Schmelzbereich, der bevorzugt zwischen 30 und 110°C, bevorzugter zwischen 40 und 80°C und besonders bevorzugt zwischen 50 und 60°C liegen soll. Als Wachskomponente ist z.B. Terhell®, Typ 5405 der Fa. Schümann besonders bevorzugt, das einen Schmelzbereich von 54 - 56°C aufweist.

Beispiele für erfindungsgemäß einsetzbare Wachse sind Wachse der Firma BASF: Polygen® WE5, Luwax® A, Luwax Al60, Luwax Al61, Luwax AH6, Luwax Al3, Luwax AH3, Luwax EAS1, Luwax EVA1, Luwax EVA2, Luwax AF, Luwax AF29, Luwax AF30, Luwax AF31, Luwax AF32, Luwax OA, Luwax OA3, Luwax OA4, Luwax OA5, Luwax FB und Luwax LK4 sowie die Marken Basophob, Dewanil, Keroflux; und Wachse der Firma Shell: Paraffin Wax Grade 125/130, Paraffin Wax Grade 130/135, Paraffin Wax Grade 135/140, Paraffin Wax Grade 140/145, Paraffin Wax Grade 145/150 und Paraffin Wax Grade 150/155.

Im fertigen Bindersystem liegt das Gewichtsverhältnis zwischen eingesetzter Polymerkomponente und eingesetzter Wachskomponente (Paraffinwachs) bevorzugt im Bereich von 0,05 bis 0,35, bevorzugter von 0,08 bis 0,20 und besonders bevorzugt von 0,10 bis 0,13.

Erfindungsgemäß besonders zweckmäßige Polymer/Wachs-Mischungen sind Terhell 5405/Elvax 210; Terhell 5405/Lupolen VK 3510; Terhell 5405/Lupolen 5510 Sx; Terhell 5405/ Lupolen 2520 J; Terhell 5405/Lupolen 2910 K; Terhell 5405/Elvax 210 und (Terhell 5405 + Luwax V) /Elvax 210. Die Kombination Elvax 210 mit Terhell 5405 und Luvax V hat sich als besonders zweckmäßig herausgestellt. Durch die erfindungsgemäß verwendeten Polymer/Wachs-Mischungen im allgemeinen und den genannten speziellen Mischungen im besonderen können niedrigviskose, strukturviskos fließende Bindersysteme erhalten werden, die sich für die erfindungsgemäßen Spritzgußmassen mit nanoskaligen Pulvern als besonders günstig erwiesen haben.

Neben diesen Binderbestandteilen enthält die erfindungsgemäße Spritzgußmasse mindestens ein Säureamid als Obertlächenmodifikator, der bei der Umsetzung die Kompatibilität zwischen den unpolaren Wachsen und Polymeren und den polaren Pulveroberflächen herstellt. Ohne an eine Theorie gebunden sein zu wollen, wird davon ausgegangen, daß zumindest ein Teil des Säureamids eine Oberflächenmodifizierung der im nanoskaligen Pulver enthaltenen Teilchen bewirkt.

Bei dem Säureamid handelt es sich im allgemeinen um ein Carbonsäureamid, das sich von gesättigten und ungesättigten Carbonsäuren mit vorzugsweise mehr als 7 und insbesondere 12 bis 24 Kohlenstoffatomen ableitet. Säureamide von gesättigten Carbonsäuren sind bevorzugt. Besonders bevorzugt wird hierbei ein Stearinsäureamid. Das Amid kann am Stickstoff auch mono- oder di- substituiert sein, z.B. mit einer Alkylgruppe.

Beispiele für die bevorzugten langkettigen Carbonsäureamide sind mittlere Fettsäureamide (mit 8 bis 12 Kohlenstoffatomen) und bevorzugt höhere Fettsäureamide (mit mehr als 12 Kohlenstoffatomen), wie Capryl-, Pelargon-, Caprin-, Undecan-, Laurin-, Tridecan-, Myristin-, Pentadecan-, Palmitin-, Margarin-, Stearin-, Nonadecan-, Arachin-, Behen-, Lignocerin-, Cerotin-, Melissin-, Palmitolein-, Öl-, Eruca- und Linolsäureamid. Weitere Beispiele sind N,N'-Ethylenbisstearinsäureamid, N-(4-Hydroxyphenyl)stearinsäureamid, N(-2-(Diethylamino)ethyl)stearinsäureamid und Octadecanamid. Stearinsäureamid ist besonders bevorzugt.

Allgemein lassen sich alle Carbonsäureamide einsetzen, die sich von den üblicherweise als Oberflächenmodifikatoren verwendeteten Carbonsäuren ableiten. Oberrraschenderweise wurde aber erfindungsgemäß festgestellt, daß die Amide einen wesentlich günstigeren Einfluß auf die Verarbeitbarkeit der Spritzgußmassen, z.B. im Hinblick auf die Viskosität, als die analogen Carbonsäuren zeigen.

Die Spritzgußmassen können gegebenenfalls weitere übliche Zusätze enthalten. Beispiele sind Plastifizierer und Weichmacher. Die Spritzgußmasse enthält aber bevorzugt keine weiteren Zusätze.

Bevorzugte Spritzgußmassen, mit denen sich die nanoskaligen Pulver gut spritzgießen lassen, enthalten Pulvergehalte von mehr als 35 Vol.-%, bevorzugt mehr als 40 Vol.-% und besonders bevorzugt mehr als 45 Vol.-%. Bevorzugt enthält die Spritzgußmasse das nanoskalige Pulver mit einem Gehalt von 35 bis 60 Vol.-%, insbesondere etwa 50 Vol.-%.

Die Spritzgußmassen enthalten das Säureamid bevorzugt in Konzentrationen von 15 bis 25 Vol. %, besonders bevorzugt 18 Vol. %. Das Wachs, insbesondere das Paraffinwachs, ist in den Spritzgußmassen z.B. in Mengen von 20 bis 40 Vol.-%, bevorzugt von 25 bis 35 Vol.-%, besonders bevorzugt 29 Vol.-%, enthalten.

Die thermoplastische Polymermischung ist in der Spritzgußmischung bevorzugt in Mengen von 2,5 bis 17 Vol.-% bevorzugt 3,5 bis 10 Vol.-% enthalten. Bei der Mischung von Polyvinylether und Ethylen-Vinylacetat-Copolymer als thermoplastisches Polymer liegt das Ethylen-Vinylacetat-Copolymer bevorzugt in Mengen von 0,5 bis 7 Vot.-%, bevorzugt 0,5 bis 5 Vol.-%, besonders bevorzugt 2 Vol.-%, und der Polyvinylether bevorzugt in Mengen von 2 bis 10 Vol.-%, bevorzugt 4 Vol.-%, in der Spritzgußmasse vor.

Die Binderzusätze werden in einer bevorzugten Ausführungsform im Verhältnis 3-7 Vol. % Polyvinylether (PVE), 0,5-3 Vol. % EVA und 20-40 Vol. % Paraffinwachs (PW) versetzt. Besonders bevorzugt sind die Verhältnisse 4 PVE, 2 EVA, 29 PW und 18 Stearinsäureamid (Vol.-%).

Unter Verwendung der Prozeßhilfsmittel EVA-Copolymer, Polyvinylether, Paraffinwachs und Stearinsäureamid gelang die Herstellung eines Spritzgußversatzes mit einem Pulvergehalt von bis zu 47 Vol.-% an nanoskaligen Teilchen. Beispielsweise liegen die Mischverhältnisbereiche bei 46,98 Vol.-% Al₂O₃, 1,91 Vol.-% EVA Copolymer Elvax 210, 3,83 Vol.-% Polyvinylether Luwax V; 29,02 Vol.-% Paraffinwachs Terhell 5405 und 18,26 Vol.% Stearinsäureamid.

Die nanoskaligen Pulver werden mit den Polymeren und den Wachsen und dem Carbonsäureamid in üblichen Misch- oder Knetanlagen compoundiert. Für das Homogenisieren können handelsübliche Knetaggregate bevorzugt bei Temperaturen im Bereich von 80 bis 120°C genutzt werden, wobei das resultierende Drehmoment bevorzugt zwischen 10 und 30 Nm liegt. Geignete Vorrichtungen zum Compoundieren sind z.B. Kneter, Doppelschneckenextruder oder Scherwalzenkompaktoren. Für den Mischvorgang wird das Bindermaterial z.B. unter vorstehend genannter Temperatureinwirkung in einen schmelzförmigen Zustand gebracht und dann das Pulver und Säureamid zugegeben. Der Misch- oder Knetprozeß wird so lange durchgeführt, bis eine homogene Mischung erreicht ist. Die geeignete Einstellung der Parameter, wie Temperatur und erforderliche Scherwirkung, zur optimalen Compoundierung sind dem Fachmann bekannt. Durch eine erhöhte Scherwirkung können z.B. gegebenfalls vorhandene Pulveragglomerate aufgebrochen werden. Nach dem Homogenisieren kann die keramische Masse z.B. in Form eines Granulats gewonnen werden, das dann weiterverarbeitet wird.

Die Spritzgußmasse kann an üblichen Spritzguß- oder Spritzpressanlagen zu Grünkörpern verarbeitet werden. Der dafür notwendige Spritzdruck liegt zwischen 10 und 120 bar, bevorzugt zwischen 20 und 90 bar und besonders bevorzugt zwischen 30 und 60 bar.

Nach dem Spritzgießen muß der Binder wieder aus den Formteilen entfernt werden, ohne daß diese dabei in ihrer Struktur geschädigt werden. Das gängigste Verfahren zum Entbindem von Grünkörpern ist ein rein thermisches Verfahren. Zum fehlerfreien Entbindem von Grünkörpern, die aus sehr feinen Pulvern aufgebaut sind, ist es notwendig, geringe Aufheizraten zu wählen, so daß häufig ein Zeitraum von mehreren Tagen zum Entbindem notwendig ist. Hieraus ist ersichtlich, daß ein einstufiges thermisches Entbindem von spritzgegossenen Formteilen aus nanoskaligen Pulvern mit eminent hohen Verarbeitungszeiträumen und hohen Energiekosten verbunden ist. Diese Zeiträume und Kosten lassen sich mit den erfindungsgemäßen Spritzgußmassen dadurch verkürzen, daß man einen Großteil des Bindergemisches über Extraktion entfernt, wobei die Extraktion mit einem organischen Lösungsmittel oder mit einem überkritischen Fluid durchgeführt werden kann. Die erfindungsgemäße Spritzgußmasse erlaubt die Realisierung eines Spritzgußversatzes, bei dem ein Großteil der organischen Prozeßhilfsmittel (> 50 Gew.-%) über ein Extraktionsverfahren entfembar ist. Die verbleibenden organischen Prozeßhilfsmittel verleihen dem Grünkörper die notwendige Stabilität, die er für einen weitergehenden Sinterprozeß benötigt, der dann thermisch ausgeführt wird.

Aus den mit der erfindungsgemäßen Spritzgußmasse hergestellten Grünkörpern kann das beschriebene Bindersystem daher vorteilhafterweise nicht nur rein thermisch (beste Bedingungen: 1 K/min auf 450°C und 5 K/min auf 1600°C) entfernt werden, sondern große Teile des Bindersystems lassen sich auch über eine Extraktion (am günstigsten mit n-Octan bei 60°C) entfernen. Die restlichen Binderanteile gewährleisten die Grünfestigkeit der Bauteile und werden erst in einem zweiten Schritt thermisch entfernt. Da die Extraktion deutlich schneller erfolgen kann als ein thermisches Entbindern, können somit Zeit und Kosten eingespart werden.

ZrO,-Formteile aus den erfindungsgemäßen Spritzgußmassen mit einer Dicke von 2,5 mm konnten innerhalb von 8 Stunden entbindert werden, davon fiel 1 Stunde auf eine Extraktion mit n-Octan bei 60°C und 7 Stunden auf das thermische Entbindern (1 K/min bis 450°C). Dies entspricht einer Gesamtentbinderungsrate von 0,156 mm/h. Die Gesamtentbinderungsdauer für vergleichbare, aber rein thermisch entbinderte ZrO₂-Formteile (d50 = 70 nm) beträgt nach der obengenannten Literatur von Song und Evans bei einer Formteilchendicke von 6 mm 198 Stunden. Daraus ergibt sich eine Entbinderungsrate von 0,015 mm/h, also eine Größenordnung langsamer. Auch kann über die Extraktion das extrahierte Bindergemisch vorteilhafterweise zurückgewonnen werden. Die Extraktion kann mit Hilfe von überkritischem CO₂ erfolgen oder mit Hilfe von organischen Lösungsmitteln, bevorzugt Alkanen und besonders bevorzugt Pentan, Hexan, Heptan und Octan.

Nach dem Entbindern erfolgt die Sinterung des Formkörpers unter Erhalt des gesinterten keramischen Formkörpers. Der gesinterte Formkörper kann z.B. für Mikrotechniken, im Maschinenbau, im Anlagenbau und im Gerätebau, in der Mikromechanik und für implantate verwendet werden. Es lassen sich kleine filigrane keramische Bauteile mit Mikrostrukturen wie sie z.B. in der Mikromechanik benötigt werden mit hoher Qualität und Dimensionstreue herstellen. Beispielsweise können keramische Zahnräder hergestellt werden, die sich für die Mikromechanik eignen.

Das folgende Beispiel erläutert die Erfindung.

### BEISPIEL

Die Verarbeitung eines nanoskaligen Pulvers aus Nanoteilchen über Spritzgießen erfolgt zunächst in einem kommerziell verfügbaren Knetaggregat, wobei der Pulvergehalt zunächst auf 43 Vol-% eingestellt wird. Hierzu werden zunächst 11 g Elvax 210, 21,8 g LuwaxV und 161 g Paraffinwachs 5405 vermischt. Danach werden 817 g nanoskaliges Al₂O₃ und 81,7 g Stearinsäureamid hinzugegeben. Die Homogenisierung erfolgt bei 120°C. Anschließend wird der Versatz an einem Scherwalzenkompakter aufkonzentriert, um die Endkonzentration an Nanoteilchen von 47 Vol-% zu erreichen, und granuliert. Insgesamt bedeutet dies die Zugabe von weiteren 200 g nanoskaligem Al₂O₃, und 20 g Stearinsäure. Das erhaltene Granulat wird anschließend in einer Spritzgußmaschine verarbeitet.

## Patentansprüche

1. Spritzgussmassen, enthaltend ein thermoplastisches Polymer, mindestens ein Wachs, mindestens ein nanoskaliges Chalkogenid-, Carbid- oder Nitridpulver und mindestens ein Säureamid, **dadurch gekennzeichnet, dass** das thermoplastische Polymer eine Mischung von Polyvinylether und Ethylen-Vinylacetat-Copolymer ist.

2. Spritzgussmassen nach Anspruch 1, **dadurch gekennzeichnet, dass** das nanoskalige Chalkogenidpulver ein Oxid- oder Sulfidpulver ist.

3. Spritzgussmassen nach Anspruch 1 oder 2, **dadurch gekennzeichnet, dass** das Wachs ein Paraffinwachs ist.

4. Spritzgussmassen nach einem der Ansprüche 1 bis 3, **dadurch gekennzeichnet, dass** sich das Säureamid von einer gesättigten Carbonsäure mit 12 bis 24 Kohlenstoffatomen ableitet.

5. Spritzgussmassen nach Anspruch 4, **dadurch gekennzeichnet, dass** das Säureamid Stearinsäureamid ist.

6. Spritzgussmassen nach einem der Ansprüche 1 bis 5, **dadurch gekennzeichnet, dass** das Säureamid in Konzentrationen von 15 bis 25 Vol. %, bevorzugt 18 Vol. %, enthalten ist.

7. Spritzgussmassen nach einem der Ansprüche 1 bis 6, **dadurch gekennzeichnet, dass** das Ethylen-Vinylacetat-Copolymer in Mengen von 1 bis 5 Vol.-%, bevorzugt 2 Vol.-%, enthalten ist.

8. Spritzgussmassen nach einem der Ansprüche 1 bis 7, **dadurch gekennzeichnet, dass** der Polyvinylether in Mengen von 2 bis 10 Vol.-%, bevorzugt 4 Vol.-%, enthalten ist.

9. Spritzgussmassen nach einem der Ansprüche 1 bis 8, **dadurch gekennzeichnet, dass** das Wachs in Mengen von 25 bis 35 Vol.-%, bevorzugt 29 Vol.-%, enthalten ist.

10. Spritzgussmassen nach einem der Ansprüche 1 bis 9, **dadurch gekennzeichnet, dass** der Pulvergehalt 35 bis 60 Vol.-%, bevorzugt 50 Vol.-%, beträgt.

11. Spritzgussmassen nach einem der Ansprüche 1 bis 10, **dadurch gekennzeichnet, dass** die resultierenden Drehmomente bei einem Pulvergehalt von 45 Vol.-% unterhalb 20 Nm liegen.

12. Verfahren zur Herstellung von Spritzgussmassen nach einem der Ansprüche 1 bis 11, **dadurch gekennzeichnet, dass** mindestens ein nanoskaliges Chalkogenid-, Carbid- oder Nitridpulver und mindestens ein Säureamid mit einer Mischung von mindestens einem thermoplastischen Polymer aus einer Mischung von Polyvinylether und Ethylen-Vinylacetat-Copolymer und mindestens einem Wachs compoundiert werden und die Spritzgussmasse in Form eines Granulats gewonnen wird.

13. Verfahren zur Herstellung eines gesinterten Formkörpers, bei dem eine Spritzgussmasse nach einem der Ansprüche 1 bis 11 in einer Spritzgussanlage oder einer Spritzpressanlage spritzgegossen wird und der erhaltene Grünling entbindert und gesintert wird.

14. Verfahren nach Anspruch 13, **dadurch gekennzeichnet, dass** der Binder zunächst teilweise durch Extraktion und anschließend durch Wärmebehandlung entfernt wird.

15. Gesinterter Formkörper, erhältlich durch ein Verfahren nach Anspruch 13 oder 14.

16. Verwendung der gesinterten Formkörper nach Anspruch 15 für Mikrotechniken, im Maschinenbau, im Anlagenbau und im Gerätebau, in der Mikromechanik und für Implantate.

## Claims

1. Injection-moulding compositions comprising a thermoplastic polymer, at least one wax, at least one nanosize chalcogenide, carbide or nitride powder and at least one acid amide, **characterized in that** the thermoplastic polymer is a mixture of polyvinyl ether and ethylene-vinyl acetate copolymer.

2. Injection-moulding compositions according to Claim 1, **characterized in that** the nanosize chalcogenide powder is an oxide or sulphide powder.

3. Injection-moulding compositions according to Claim 1 or 2, **characterized in that** the wax is a paraffin wax.

4. Injection-moulding compositions according to any of Claims 1 to 3, **characterized in that** the acid amide is derived from a saturated carboxylic acid having from 12 to 24 carbon atoms.

5. Injection-moulding compositions according to Claim 4, **characterized in that** the acid amide is stearamide.

6. Injection-moulding compositions according to any of Claims 1 to 5, **characterized in that** the acid amide is present in concentrations of from 15 to 25% by volume, preferably 18% by volume.

7. Injection-moulding compositions according to any of Claims 1 to 6, **characterized in that** the ethylene-vinyl acetate copolymer is present in amounts of from 1 to 5% by volume, preferably 2% by volume.

8. Injection-moulding compositions according to any of Claims 1 to 7, **characterized in that** the polyvinyl ether is present in amounts of from 2 to 10% by volume, preferably 4% by volume.

9. Injection-moulding compositions according to any of Claims 1 to 8, **characterized in that** the wax is present in amounts of from 25 to 35% by volume, preferably 29% by volume.

10. Injection-moulding compositions according to any of Claims 1 to 9, **characterized in that** the powder content is from 35 to 60% by volume, preferably 50% by volume.

11. Injection-moulding compositions according to any of Claims 1 to 10, **characterized in that** the resulting torques at a powder content of 45% by volume are below 20 Nm.

12. Process for producing injection-moulding compositions according to any of Claims 1 to 11, **characterized in that** at least one nanosize chalcogenide, carbide or nitride powder and at least one acid amide are compounded with a mixture of at least one thermoplastic polymer comprising a mixture of polyvinyl ether and ethylene-vinyl acetate copolymer and at least one wax and the injection-moulding composition is obtained in the form of a pelletized material.

13. Process for producing a sintered shaped body, in which an injection moulding according to any of Claims 1 to 11 is injection moulded in an injection-moulding unit or a transfer-moulding unit and the green body obtained is subjected to binder removal and sintered.

14. Process according to Claim 13, **characterized in that** the binder is firstly partly removed by extraction and subsequently by heat treatment.

15. Sintered shaped body obtainable by a process according to Claim 13 or 14.

16. Use of the sintered shaped bodies according to Claim 15 for microtechniques, in machine construction, in plant construction and in instrument construction, in micromechanics and for implants.

## Revendications

1. Matières pour moulage par injection, contenant un polymère thermoplastique, au moins une cire, au moins une poudre de chalcogénure, de carbure ou de nitrure, dont les particules sont nanométriques, et au moins un amide d'acide, **caractérisées en ce que** le polymère thermoplastique est un mélange de poly(éther vinylique) et de copolymère d'éthylène et d'acétate de vinyle.

2. Matières pour moulage par injection selon la revendication 1, **caractérisées en ce que** la poudre de chalcogénure dont les particules sont nanométriques, est une poudre d'oxyde ou de sulfure.

3. Matières pour moulage par injection selon la revendication 1 ou 2, **caractérisées en ce que** la cire est une cire de paraffine.

4. Matières pour moulage par injection selon l'une quelconque des revendications 1 à 3, **caractérisées en ce que** l'amide d'acide dérive d'un acide carboxylique saturé, ayant 12 à 24 atomes de carbone.

5. Matières pour moulage par injection selon la revendication 4, **caractérisées en ce que** l'amide d'acide est l'amide de l'acide stéarique.

6. Matières pour moulage par injection selon l'une quelconque des revendications 1 à 5, **caractérisées en ce qu'**elles contiennent 15 à 25 % en volume, de préférence 18 % en volume, d'amide d'acide.

7. Matières pour moulage par injection selon l'une quelconque des revendications 1 à 6, **caractérisées en ce qu'**elles contiennent 1 à 5 % en volume, de préférence 2 % en volume, de copolymère d'éthylène et d'acétate de vinyle.

8. Matières pour moulage par injection selon l'une quelconque des revendications 1 à 7, **caractérisées en ce qu'**elles contiennent 2 à 10 % en volume, de préférence 4 % en volume, de poly(éther vinylique).

9. Matières pour moulage par injection selon l'une quelconque des revendications 1 à 8, **caractérisées en ce qu'**elles contiennent 25 à 35 % en volume, de préférence 29 % en volume, de cire.

10. Matières pour moulage par injection selon l'une quelconque des revendications 1 à 9, **caractérisées en ce que** leur teneur en poudre est de 35 à 60 % en volume, de préférence 50 % en volume.

11. Matières pour moulage par injection selon l'une quelconque des revendications 1 à 10, **caractérisées en ce que** les couples de rotation résultants sont inférieurs à 20 Nm pour une teneur en poudre de 45 % en volume.

12. Procédé de préparation de matières pour moulage par injection selon l'une quelconque des revendications 1 à 11, **caractérisé en ce que** l'on mélange au moins une poudre de chalcogénure, de carbure ou de nitrure, dont les particules sont nanométriques, et au moins un amide d'acide avec un mélange d'au moins un polymère thermoplastique, constitué d'un mélange de poly(éther vinylique) et de copolymère d'éthylène et d'acétate de vinyle, et d'au moins une cire, et l'on met les matières pour moulage par injection sous la forme d'un granulé.

13. Procédé de préparation d'une pièce moulée frittée, dans lequel on moule par injection une matière pour moulage par injection selon l'une quelconque des revendications 1 à 11, dans un dispositif de moulage par injection ou une presse d'injection, et on enlève le liant de l'ébauche obtenue et la soumet à un frittage.

14. Procédé selon la revendication 13, **caractérisé en ce que** le liant est éliminé d'abord en partie par extraction, et ensuite par un traitement thermique.

15. Pièces moulées frittées, que l'on peut obtenir par le procédé selon la revendication 13 ou 14.

16. Utilisation des pièces moulées frittées selon la revendication 15, pour des microtechniques, dans la construction de machines, dans la construction d'installations et dans la construction d'appareils, dans la micromécanique et pour des greffes.
